(19) **Europäisches Patentamt** / **European Patent Office** / **Office européen des brevets**

(11) **EP 3 372 382 B1**

(12) **EUROPEAN PATENT SPECIFICATION**

(45) Date of publication and mention
of the grant of the patent:
**16.06.2021 Bulletin 2021/24**

(21) Application number: **16861821.3**

(22) Date of filing: **05.08.2016**

(51) Int Cl.:
*B29D 7/01* (2006.01)        *B32B 15/08* (2006.01)
*C08J 5/18* (2006.01)        *H01G 4/18* (2006.01)
*B32B 27/08* (2006.01)        *B32B 27/16* (2006.01)
*B32B 27/18* (2006.01)        *B32B 27/20* (2006.01)
*B32B 27/32* (2006.01)        *B29C 55/14* (2006.01)
*B29K 23/00* (2006.01)

(86) International application number:
**PCT/JP2016/073192**

(87) International publication number:
**WO 2017/077752 (11.05.2017 Gazette 2017/19)**

(54) **BIAXIALLY ORIENTED POLYPROPYLENE FILM, MULTILAYERED FILM INCLUDING METAL FILM, AND FILM CAPACITOR**

BIAXIAL AUSGERICHTETE POLYPROPYLENFOLIE, MEHRSCHICHTFOLIE MIT METALLFOLIE UND FOLIENKONDENSATOR

FILM DE POLYPROPYLÈNE À ORIENTATION BI-AXIALE, FILM MULTICOUCHE COMPRENANT UN FILM MÉTALLIQUE, ET CONDENSATEUR À FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2015 JP 2015217327**

(43) Date of publication of application:
**12.09.2018 Bulletin 2018/37**

(73) Proprietor: **Toray Industries, Inc.**
**Tokyo 103-8666 (JP)**

(72) Inventors:
• **FUJIMOTO, Soichi**
**Tsuchiura-shi**
**Ibaraki 300-0015 (JP)**
• **ASANO, Tetsuya**
**Tsuchiura-shi**
**Ibaraki 300-0015 (JP)**

(74) Representative: **Hoefer & Partner Patentanwälte mbB**
**Pilgersheimer Straße 20**
**81543 München (DE)**

(56) References cited:
**WO-A1-2013/146367        DE-T5-112008 002 985**
**JP-A- 2006 093 688        JP-A- 2013 226 685**
**JP-A- 2014 231 584        US-A1- 2008 102 247**

• **Anonymous: "Surface Roughness - Excerpt From JIS B 0601 (1994) and JIS B 0031 (1994)", , 15 September 2015 (2015-09-15), XP055213913, Retrieved from the Internet: URL:https://in.misumi-ec.com/pdf/tech/mold /09_mo1517.pdf [retrieved on 2015-09-16]**

EP 3 372 382 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field

The present invention relates to a biaxially oriented polypropylene film having excellent transportability during processing and excellent withstand voltage characteristics under high temperature when the film is used as a dielectric substance for a film capacitor, a metal film-laminated film, and a film capacitor. Specifically, the present invention relates to a biaxially oriented polypropylene film that has excellent element processability and withstand voltage characteristics at high temperature and can be suitably used as a dielectric substance for a film capacitor.

Background

The biaxially oriented polypropylene film has excellent transparency, mechanical properties, electric properties, and other properties, and thus has been applied in various applications such as packaging applications, tape applications, and electric applications including cable wrappings and capacitors.

As the capacitor applications among these applications, the biaxially oriented polypropylene film is particularly preferably used for capacitors for high voltage in both direct current applications and alternating current applications due to its excellent withstand voltage characteristics and low loss characteristics. In recent years, various electric facilities have been replaced with inverter-based facilities. Accordingly, requirement for capacitors having smaller size and larger capacity has been further increased. In order to satisfy the requirement of such markets in which the capacitor having a smaller size and a larger capacity is required, in particular for automobile applications (including hybrid car applications), photovoltaic power generator applications, and wind power generator applications, it has become essential that the biaxially oriented polypropylene film is made to have high heat resistance while maintaining the withstand voltage characteristics.

As means for improving the withstand voltage characteristics under high temperature, it is believed that control of the uniform surface shape of the biaxially oriented polypropylene film is effective. For example, a method in which a generation ratio of β crystal and melting of β crystal are controlled by modifying characteristics of the molecular structure of a polypropylene resin to be used, whereby a surface shape such as the total volume of projection parts formed on the surface of the film is controlled, and thus the withstand voltage characteristics are improved has been developed (for example, refer to Patent Literature 1). In Patent Literature 1, the projection parts as well as profile valley parts are generated on the film surface. The inventors of the present invention have found that, when the depth and volume of the profile valley part formed on the film surface becomes larger, the film is more likely to causes dielectric breakdown. Patent Literature 1, however, neither has described nor has suggested about the profile valley part on the film surface. In addition, the film in Patent Literature 1 has not satisfied the withstand voltage characteristics at high temperature, which are required for current capacitors.

A method in which surface shapes such as surface unevenness and glossiness are controlled by adding a branched-chain polypropylene to change the spherulite size of polypropylene and thus the withstand voltage characteristics are improved has been developed (for example, refer to Patent Literature 2 and Patent Literature 3). Patent Literature 2 and Patent Literature 3, however, have not described the relation between the profile valley part formed on the film surface and the dielectric breakdown at all. Consequently, the films in Patent Literature 2 and Patent Literature 3 have not satisfied the withstand voltage characteristics at high temperature, which are required for current capacitors.

A method in which a surface shape is controlled by controlling conditions for air knife in a process of forming a sheet from a melted polymer and thus the processability and the withstand voltage characteristics are improved has been developed (for example, refer to Patent Literature 4). Patent Literature 4, however, has not described the relation between the profile valley part formed on the film surface and the dielectric breakdown. Consequently, the films in Patent Literature 4 has not satisfied the withstand voltage characteristics at high temperature, which are required for current capacitors.

A polyester film for a capacitor that satisfies both element processability and insulation resistance by controlling the surface roughness and number of protrusion parts on a film has been also developed (for example, refer to Patent Literature 5). Patent Literature 5 has a possibility of controlling the surface shape such as the profile valley part. The surface formation of the polyester film, however, is made by containing particles. The film having the excellent withstand voltage characteristics at high temperature cannot be obtained even when such a surface of the film is formed by containing particles in a polypropylene film.

Citation List

Patent Literature

Patent Literature 1: Japanese Laid-open Patent Publication No. 2014-231584
Patent Literature 2: Japanese Laid-open Patent Publication No. 2007-246898
Patent Literature 3: Japanese Laid-open Patent Publication No. 2011-122142
Patent Literature 4: Japanese Laid-open Patent Publication No. 2011-122143
Patent Literature 5: Japanese Patent No. 3829424

Summary

Technical Problem

An object of the present invention is to solve the above problems. More specifically, an object of the present invention is to provide a biaxially oriented polypropylene film including a polypropylene resin as a main component and having the excellent element processability and excellent withstand voltage characteristics at high temperature, a metal film-laminated film, and a film capacitor.

Solution to Problem

The object can be achieved by a biaxially oriented polypropylene film including a polypropylene resin as a main component, the biaxially oriented polypropylene film having an arithmetic average roughness SRa on at least one surface of 0.03 $\mu$m to 0.10 $\mu$m, a maximum profile valley depth SRv on at least one surface of 0.10 $\mu$m to 0.50 $\mu$m, and a profile valley side void volume having a depth of 0.05 $\mu$m or more existing in a visual field area in a range of 1,252 $\mu$m × 939 $\mu$m on at least one surface measured by non-contact surface shape measurement of 100 $\mu$m to 10,000 $\mu$m$^3$.

Advantageous Effects of Invention

When the biaxially oriented polypropylene film of the present invention is used as the dielectric substance for a capacitor, the biaxially oriented polypropylene film can be suitably used as the dielectric substance for a capacitor due to the excellent element processability and withstand voltage characteristics at high temperature.

Description of Embodiments

Hereinafter, the biaxially oriented polypropylene film, the metal film-laminated film, and the film capacitor of the present invention will be described in more detail.

The biaxially oriented polypropylene film of the present invention is formed of a polypropylene resin composition including a polypropylene resin as a main component. The term "main component" means that the ratio of the polypropylene resin in the polypropylene resin composition is 80% by mass or more. The ratio is more preferably 85% by mass or more, further preferably 90% by mass or more, and particularly preferably 95% by mass or more.

As the polypropylene resin, a homopolymer of propylene can be mainly used. However, a copolymer component of propylene and other unsaturated hydrocarbons may be used, or the copolymer of propylene and other unsaturated hydrocarbons may be blended with the homopolymer of propylene as long as the object of the present invention is not impaired. Examples of monomer components constituting such a copolymer component include ethylene, propylene (in the case of a copolymerized blended composition), 1-butene, 1-pentene, 3-methylpentene-1, 3-methylbutene-1, 1-hexene, 4-methylpentene-1, 5-ethylhexene-1, 1-octene, 1-decene, 1-dodecene, 1-tetradecene, 1-hexadecene, 1-heptadecene, 1-octadecene, 1-eicosene, vinylcyclohexene, styrene, allylbenzene, cyclopentene, norbornene, and 5-methyl-2-norbornene. As the copolymerized amount of the other unsaturated hydrocarbons or the blended amount of the copolymer, the ratio of the other unsaturated hydrocarbons described above in the propylene resin is preferably set to less than 1 mol% from the viewpoint of the withstand voltage characteristics at high temperature and dimensional stability.

The cold xylene soluble fraction (hereinafter abbreviated to as CXS) of the polypropylene resin constituting the biaxially oriented polypropylene film of the present invention is preferably 4% by mass or less. Here, the CXS means a polypropylene component dissolved in xylene when a dissolved film is precipitated at 20°C after the film is completely dissolved in xylene at 135°C. The component is considered to correspond to a component that is difficult to crystallize due to reasons of low stereoregularity and low molecular weight. The CXS of the polypropylene resin is more preferably 3% by mass or less, further preferably 2% by mass or less, and particularly preferably 1% by mass or less. When the CXS is more than 4% by mass, the withstand voltage characteristics at high temperature and the dimensional stability of the biaxially oriented polypropylene film may deteriorate. In order to control the CXS of the polypropylene resin within the above range, a method of improving catalyst activity when the polypropylene resin is obtained, a method of washing the obtained polypropylene resin with a solvent or a propylene monomer itself, and other methods are employed.

The mesopentad fraction (mmmm) of the polypropylene resin constituting the biaxially oriented polypropylene film of the present invention is preferably in a range of 0.950 to 0.990, more preferably in a range of 0.960 to 0.990, further preferably in a range of 0.970 to 0.990, and particularly preferably in a range of 0.970 to 0.985. The mesopentad fraction is an index indicating the stereoregularity of the crystal phase of polypropylene resins measured by a nuclear magnetic resonance method (what is called a NMR method). As the value of the mesopentad fraction becomes higher, a degree of crystallization and a melting point become higher and thus the biaxially oriented polypropylene film has excellent withstand voltage characteristics not only at room temperature but also under high temperature. Consequently, the higher value of the mesopentad fraction is preferable. When the mesopentad fraction (mmmm) of the polypropylene resin is less than 0.950, the withstand voltage characteristics at high temperature and the dimensional stability may deteriorate. On the other hand, when the mesopentad fraction (mmmm) of the polypropylene resin is more than 0.990, the biaxially oriented polypropylene film may not be obtained stably due to poor film formability and the withstand voltage characteristics at high temperature may deteriorate due to excessively high crystallinity. In order to control the mesopentad fraction of the polypropylene resin within the above range, a method for washing the obtained polypropylene resin powder with a solvent such as n-heptane and a method for adequately selecting a catalyst and/or a cocatalyst and selecting the components of the polypropylene resin composition are preferably employed.

The melt flow rate (hereinafter, abbreviated as MFR) of the polypropylene resin constituting the biaxially oriented polypropylene film of the present invention is preferably 0.5 g/10 minutes to 10 g/10 minutes, more preferably 1 g/10 minutes to 8 g/10 minutes, further preferably 1.5 g/10 minutes to 5 g/10 minutes, and particularly preferably 2 g/10 minutes to 5 g/10 minutes when the MFR is measured in accordance with JIS K 7210 (1995) Condition M (230°C, 2.16 kg). When the MFR of the polypropylene resin is less than 0.5 g/10 minutes, the polypropylene resin has poor film formability and thus the biaxially oriented polypropylene film may not be obtained. On the other hand, when the MFR of the polypropylene resin is more than 10 g/10 minutes, the withstand voltage characteristics at high temperature may deteriorate. In order to control the MFR of the polypropylene resin within the above range, a method of controlling the average molecular weight and the molecular weight distribution of the polypropylene resin and other methods are preferably employed.

The biaxially oriented polypropylene film of the present invention has an arithmetic average roughness SRa of 0.03 $\mu$m to 0.10 $\mu$m on at least one surface from the viewpoint of the element processability. The arithmetic average roughness SRa is more preferably 0.03 $\mu$m to 0.08 $\mu$m, further preferably 0.04 $\mu$m to 0.07 $\mu$m, and particularly preferably 0.04 $\mu$m to 0.06 $\mu$m. When the arithmetic average roughness SRa is less than 0.03 $\mu$m, a sliding property is worsened and thus transport wrinkles are likely to be generated in a film transporting process during the film formation and the film processing. This may worsen the winding shape of a film roll and may cause the film to break in some cases. On the other hand, when the arithmetic average roughness SRa is more than 0.10 $\mu$m, meandering of the film is likely to occur in the film transporting process during the film formation and the film processing. This may worsen the winding shape of the film roll. When the arithmetic average roughness SRa on at least one surface satisfies the above range, the sliding property between the surface and a transport roll in contact with the surface becomes excellent, and thus processability is improved. In particular, when the arithmetic average roughnesses SRa on both surfaces satisfy the above range, the sliding property between both surfaces and the transport roll becomes excellent. This case is more preferable because the film has excellent processability not depending on the arrangement of the roll in apparatus in the film transporting process. In order to control the arithmetic average roughness SRa within the above range, the above polypropylene resin may be used and specific conditions may be employed in the casting process during the film formation as described below.

The biaxially oriented polypropylene film of the present invention has a maximum profile valley depth SRv of 0.10 $\mu$m to 0.50 $\mu$m on at least one surface from the viewpoint of the withstand voltage characteristics at high temperature. The maximum profile valley depth SRv is more preferably 0.10 $\mu$m to 0.40 $\mu$m, further preferably 0.10 $\mu$m to 0.30 $\mu$m, and particularly preferably 0.10 $\mu$m to 0.20 $\mu$m. When the maximum profile valley depth SRv is more than 0.50 $\mu$m, dielectric breakdown may be likely to occur and thus the withstand voltage characteristics at high temperature may deteriorate. The unevenness of the film surface of the biaxially oriented polypropylene film of the present invention is generally difficult to completely eliminate from the viewpoint of deforming the crystal formed in the cast sheet by the subsequent stretching process. Consequently, the lower limit of the maximum profile valley depth SRv is substantially 0.10 $\mu$m. When the maximum profile valley depth SRv on at least one surface satisfies the above range, the withstand voltage characteristics become excellent. In particular, when the maximum profile valley depths SRv of both surfaces satisfy the above range, this case is more preferable from the viewpoint of the withstand voltage characteristics because, as the whole film, the profile valley parts, which are likely to cause dielectric breakdown, become smaller. In order to control the maximum profile valley depth SRv within the above range, the above polypropylene resin may be used and specific conditions may be employed in the casting process during the film formation as described below.

The biaxially oriented polypropylene film of the present invention has a profile valley side void volume having a depth of 0.05 $\mu$m or more of 100 $\mu$m to 10,000 $\mu$m$^3$ on at least one surface from the viewpoint of the withstand voltage characteristics at high temperature. The profile valley side void volume exists in the visual field area in a range of 1,252 $\mu$m $\times$ 939 $\mu$m and is measured by non-contact surface shape measurement. The profile valley side void volume is more preferably 100 $\mu$m to 8,000 $\mu$m$^3$, further preferably 100 $\mu$m$^3$ to 6,000 $\mu$m$^3$, and particularly preferably 100 $\mu$m$^3$ to 5,000 $\mu$m$^3$. When the profile valley side void volume is more than 10,000 $\mu$m$^3$, the dielectric breakdown may be likely to occur and the withstand voltage characteristics at high temperature may deteriorate. The unevenness of the film surface of the biaxially oriented polypropylene film of the present invention is generally difficult to completely eliminate from the viewpoint of deforming the crystal formed in the cast sheet by the subsequent stretching process. Consequently, the lower limit of the profile valley side void volume is substantially 100 $\mu$m$^3$. When the profile valley side void volume on at least one surface satisfies the above range, the withstand voltage characteristics become excellent. In particular, when the profile valley side void volumes of both surfaces satisfy the above range, this case is more preferable from the viewpoint of the withstand voltage characteristics because, as the whole film, the profile valley parts, which are likely to cause dielectric breakdown, become smaller. In order to control the profile valley side void volume within the above range, the above polypropylene resin may be used and specific conditions may be employed in the casting process during the film formation as described below.

The biaxially oriented polypropylene film of the present invention preferably has a maximum profile peak height SRp of 0.30 $\mu$m to 1.0 $\mu$m on at least one surface from the viewpoint of the element processability. The maximum profile peak height SRp is more preferably 0.50 $\mu$m to 0.95 $\mu$m, further preferably 0.55 $\mu$m to 0.90 $\mu$m, and particularly preferably 0.60 $\mu$m to 0.85 $\mu$m. When the maximum profile peak height SRp is less than 0.30 $\mu$m, sliding properties worsen. This may be likely to cause transport wrinkles in the film transporting process during the film formation and the film processing, resulting in worsening the winding shape of the film roll or, in some cases, breaking the film. On the other hand, when the maximum profile peak height SRp is more than 1.0 $\mu$m, the film roll may buckle when the film is wound in the form of a roll, resulting in worsening the winding shape. This may also deteriorate the withstand voltage characteristics at high temperature. When the maximum profile peak height SRp on at least one surface satisfies the above range, the sliding property between the surface and the transport roll in contact with the surface becomes excellent, and thus processability is improved. In particular, when the maximum profile peak height SRp on both surfaces satisfy the above range, the sliding property between both surfaces and the transport roll becomes excellent. This case is more preferable because the film has excellent processability not depending on the arrangement of the roll in apparatus in the film transporting process. In order to control the maximum profile peak height SRp within the above range, the above polypropylene resin may be used and specific conditions may be employed in the casting process during the film formation as described below.

The biaxially oriented polypropylene film of the present invention preferably has a ratio of the maximum profile valley depth SRv and maximum profile peak height SRp, that is SRp/SRv, of 2.0 or more from the viewpoint of satisfying both element processability and withstand voltage characteristics at high temperature. The ratio SRp/SRv is more preferably 2.5 or more, further preferably 3.5 or more, and particularly preferably 4.0 or more. When the ratio SRp/SRv is less than 2.0, this low ratio means that the height of the profile peak part is low or the depth of the profile valley part is deep. This may cause difficulty in satisfying both element processability and withstand voltage characteristics at high temperature. When the ratio SRp/SRv on at least one surface satisfies the above range, the withstand voltage characteristics tend to be excellent. In particular, when the ratios SRp/SRv on both surfaces satisfy the above range, both element processability and withstand voltage characteristics at high temperature are likely to be satisfied. This case is more preferable because the film has excellent processability not depending on the arrangement of the roll in apparatus in the film transporting process. In order to control the ratio SRp/SRv within the above range, the above polypropylene resin may be used and specific conditions may be employed in the casting process during the film formation as described below.

The biaxially oriented polypropylene film of the present invention preferably has a film thickness t of 1.0 $\mu$m to 10 $\mu$m. The film thickness is more preferably 1.2 $\mu$m to 7 $\mu$m, further preferably 1.5 $\mu$m to 5 $\mu$m, and particularly preferably 1.5 $\mu$m to 3 $\mu$m. When the film thickness is less than 1.0 $\mu$m, the mechanical strength and the withstand voltage characteristics at high temperature may deteriorate and the film may break during the film formation and the film processing. On the other hand, when the film thickness is more than 10 $\mu$m, a capacity per volume may decrease when the biaxially oriented polypropylene film is used as the dielectric substance for a capacitor. In order to control the film thickness t within the above range, the film thickness t is adequately set by adjusting the discharging rate of the resin or adjusting a draft ratio during the sheet formation. As the film thickness t becomes thinner, the film break during the film formation occurs more easily. Consequently, the biaxially oriented polypropylene film can be stably formed by using the above polypropylene resin and employing specific conditions in the longitudinal stretching process and the transverse stretching process during the film formation as described below.

The biaxially oriented polypropylene film of the present invention preferably has a ratio of the film thickness t and the maximum profile valley depth SRv, that is, SRv/t of 0.30 or less. The ratio SRv/t is more preferably 0.15 or less, further preferably 0.10 or less, and particularly preferably 0.080 or less. When the ratio SRv/t is more than 0.30, the ratio of the profile valley part per film thickness is large and thus the withstand voltage characteristics at high temperature may deteriorate. When the ratio SRv/t on at least one surface satisfies the above range, the withstand voltage characteristics tend to become excellent. In particular, when the ratios SRv/t of both surfaces satisfy the above range, this case is more preferable from the viewpoint of the withstand voltage characteristics because the profile valley parts, which are likely to cause dielectric breakdown, are shallow on both film surfaces.

The biaxially oriented polypropylene film of the present invention preferably has a glossiness of 120% to 150% on both surfaces. The glossiness is more preferably 123% to 145%, further preferably 125% to 140%, and particularly preferably 128% to 138% on both surfaces. When the glossiness is less than 120% on least one surface, the density of light scattering on the film surface is increased. In other words, this means that much unevenness exists on the film surface. The withstand voltage characteristics at high temperature may deteriorate due to this unevenness. On the other hand, when the glossiness is more than 150% on at least one surface, the biaxially oriented polypropylene film has poor sliding properties due to less unevenness on the surface of the film. This may be likely to cause transport wrinkles in the film transporting process during the film formation and the film processing, resulting in worsening the winding shape of the film roll or, in some cases, breaking the film. In order to control the glossiness within the above range on both surfaces, the above polypropylene resin may be used and specific conditions may be employed in the casting process during the film formation as described below

The biaxially oriented polypropylene film of the present invention may include a branched-chain polypropylene for the purpose of improving film formability and controlling a film surface shape. In this case, the branched-chain polypropylene is preferably a branched-chain polypropylene for which a melt tension (MS) measured at 230°C and the melt flow rate (MFR) satisfy a relational expression of log (MS)>-0.56 log (MFR)+0.74. In order to obtain the branched-chain polypropylene for which the melt tension (MS) measured at 230°C and the melt flow rate (MFR) satisfy a relational expression of log (MS)>-0.56 log (MFR)+0.74, a method of blending a polypropylene containing a high molecular weight component in high content, a method of blending an oligomer or a polymer having a branched structure, a method of introducing a branched long chain structure in polypropylene molecules as described in Japanese Patent Application Laid-open No. S62-121704, a method as described in Japanese Patent No. 2869606 or other methods are preferably employed. Specific examples include "Profax (trade name) PF-814" manufactured by LyondellBasell Industries N. V. and "Daploy HMS-PP" (WB130HMS, WB135HMS, and the like) manufactured by Borealis AG. Of these products, a resin obtained by an electron beam crosslinking method is preferably used due to less gel components in the resin. The branched-chain polypropylene described here means a polypropylene having 5 or less internal 3-substituted olefins relative to 10,000 carbon atoms. Existence of the internal 3-substituted olefins can be confirmed by proton ratios of $^1$H-NMR spectrum. The branched-chain polypropylene has an action as an $\alpha$ crystal nucleating agent and can also form a rough surface due to crystal morphology as long as the amount to be added is in a certain range. Specifically, use of the branched-chain polypropylene allows a spherulite size of the polypropylene generated during the cooling process of a melt-extruded resin sheet to be controlled in a small size, generation of insulation defects generated during the stretching process to be reduced, and the biaxially oriented polypropylene film having excellent withstand voltage characteristics at high temperature to be obtained.

When the biaxially oriented polypropylene film of the present invention includes the branched-chain polypropylene, the content is preferably 0.05% by mass to 3% by mass, more preferably 0.1% by mass to 2% by mass, further preferably 0.3% by mass to 1.5% by mass, and particularly preferably 0.5% by mass to 1% by mass. When the content of the branched-chain polypropylene is less than 0.05% by mass, the above effect may not be obtained. On the other hand, when the content of the branched-chain polypropylene is more than 3% by mass, the stereoregularity as the biaxially oriented polypropylene film may decrease and thus the withstand voltage characteristics at high temperature may deteriorate.

The polypropylene resin composition constituting the biaxially oriented polypropylene film of the present invention preferably includes various additives such as a crystal nucleating agent, an antioxidant, a heat stabilizer, an antistatic agent, an antiblocking agent, a filler, a viscosity modifier, and a coloring inhibitor as long as these additives do not impair the object of the present invention.

Of these additives, selection of the type and the content of the antioxidant are important from the viewpoint of long-term heat resistance. Accordingly, the antioxidant is preferably a phenolic antioxidant having steric hindrance and at least one of the antioxidants is preferably a high molecular weight antioxidant having a molecular weight of 500 or more. Specifically, for example, 2,6-di-t-butyl-p-cresol (BHT: molecular weight 220.4), 1,3,5-trimethyl-2,4,6-tris(3,5-di-t-butyl-4-hydroxybenzyl)benzene (for example, Irganox (registered trademark) 1330, manufactured by BASF SE, molecular weight 775.2), and tetrakis[methylene-3(3,5-di-t-butyl-4-hydroxyphenyl)propionate]methane (for example, Irganox (registered trademark) 1010, manufactured by BASF SE, molecular weight 1177.7), and the like may be preferably used singly or in combination. The total content of these antioxidants is preferably 0.03% by mass to 1.0% by mass, more preferably 0.1% by mass to 0.9% by mass, further preferably 0.15% by mass to 0.8% by mass, and particularly preferably 0.15% by mass to 0.6% by mass relative to the total amount of the polypropylene resin composition. When the content of the antioxidant in the polypropylene resin composition is less than 0.03% by mass, the antioxidant effect is less likely obtained and thus the long-term heat resistance may deteriorate. On the other hand, when the content of the antioxidant in the polypropylene resin composition is more than 1.0% by mass, the withstand voltage characteristics at high temperature may deteriorate.

The ash content of the biaxially oriented polypropylene film of the present invention is preferably 50 ppm (based on mass, same as below) or less, more preferably 40 ppm or less, further preferably 30 ppm or less, and particularly preferably 20 ppm or less. When the ash content is more than 50 ppm, the withstand voltage characteristics at high temperature of the biaxially oriented polypropylene film may deteriorate. In order to control the ash content within the above range, use of a raw material having less catalyst residue is important. A method for reducing contamination from the extrusion system during the film formation as much as possible, for example, a method for sufficiently cleaning the flow pass where the polymer flows using an undeteriorated polypropylene resin before the film formation starts may be preferably employed. As described below, containing no lubricant is important. When the polypropylene resin includes inorganic particles, the inorganic particles are detected as the ash content of the biaxially oriented polypropylene film and thus the withstand voltage characteristics at high temperature may deteriorate as described above. When the polypropylene resin includes organic particles, generally, the ash content cannot be sufficiently reduced. Consequently, the ash content of the biaxially oriented polypropylene film is difficult to be controlled within the above range.

The biaxially oriented polypropylene film of the present invention preferably includes inorganic particles and/or organic particles in the total content of 1% by mass or less. The total content of the inorganic particles and/or the organic particles is more preferably 0.8% by mass, and further preferably 0.5 % by mass. Containing no inorganic particles and/or the organic particles is particularly preferably. Generally, an easily sliding property may be provided to the smooth film having a low sliding property by adding a lubricant made of the inorganic particles and/or the organic particles to form protrusions on the surface of the film. When the film is used as the dielectric substance for a capacitor, however, the lubricant may deteriorate the withstand voltage characteristics at high temperature as foreign matters. In order to provide the easily sliding property with the total content of the inorganic particles and/or the organic particles being reduced or the inorganic particles and/or the organic particles being not contained, the crystal formed in the cast sheet of the polypropylene is deformed by the subsequent stretching process to form unevenness on the film surface as described below.

The biaxially oriented polypropylene film of the present invention preferably has a surface wetting tension on at least one surface of 37 mN/m to 50 mN/m, more preferably 38 mN/m to 49 mN/m, further preferably 39 mN/m to 48 mN/m, and particular preferably 40 mN/m to 47 mN/m. When the surface wetting tension is less than 37 mN/m, adhesion to metal may be insufficient at the time of metal deposition. On the other hand, when the surface wetting tension is more than 50 mN/m, the withstand voltage characteristics at high temperature may deteriorate. Usually, the biaxially oriented polypropylene film has low surface energy. The surface wetting tension is about 30 mN/m. In order to control the surface wetting tension within the above range, a method for applying surface treatment after biaxial stretching in the film formation is preferably employed. Specifically, corona discharge treatment, plasma treatment, glow discharge treatment, flame treatment, and the like may be employed.

The biaxially oriented polypropylene film of the present invention is preferably obtained by forming a sheet using the above-described polypropylene resin as the main component and carrying out biaxial stretching. As the method for biaxial stretching, the biaxially oriented polypropylene film can be obtained by any one of an inflation-simultaneous biaxial stretching method, a tenter simultaneous biaxial stretching method, and a tenter sequential biaxial stretching method. The tenter sequential biaxial stretching method is preferably employed from the viewpoint of film formation stability and film thickness uniformity. In particular, stretching is preferably carried out in the longitudinal direction (a direction where the film flows during film formation) and thereafter in the width direction (a direction orthogonal to the longitudinal direction on the film plane).

For the biaxially oriented polypropylene film of the present invention, a function layer may be laminated onto at least one surface for the purpose of providing various effects. As the laminated structure, two-layer lamination, three-layer lamination, or multilayer lamination of more than three layers may be employed. As the method for laminating, for example, any one of a feed block method or multi manifold method by co-extrusion and a method for laminating polypropylene films with each other by lamination may be employed.

Subsequently, a method for producing the biaxially oriented polypropylene film of the present invention will be described. The present invention, however, is not limited to the method.

First, the polypropylene resin composition containing the preferable polypropylene resin described above is fed to a single-screw melt extruder and melt extrusion is carried out at 200°C to 260°C. Subsequently, foreign matters and denatured polymers are removed with a filter installed in the middle of a polymer tube and thereafter the melted polymer is discharged from a T die onto a casting drum to give a cast sheet. A shear rate in the T die during the extrusion is preferably set to 100 sec$^{-1}$ to 1,000 sec$^{-1}$ from the viewpoint of reducing degradation of the polymer. The shear rate is more preferably 150 sec$^{-1}$ to 800 sec$^{-1}$, further preferably 200 sec$^{-1}$ to 700 sec$^{-1}$, and particularly preferably 300 sec$^{-1}$ to 600 sec$^{-1}$. The shear rate in the T die is represented by the following formula (1). When the shear rate in the T die is less than 100 sec$^{-1}$, insufficient shear is applied and thus crystal array in the cast sheet is insufficient. This results in difficulty in uniform stretching in the following stretching process and thus the biaxially oriented polypropylene film having uniform crystallinity may not be obtained. On the other hand, when the shear rate in the T die is more than 1,000 sec$^{-1}$, excessive shear is applied to the polymer and the polymer may be degraded.

$$\text{Shear rate (sec}^{-1}) = 6Q/\rho Wt^2 \quad (1)$$

where Q: Flow rate (kg/sec)
$\rho$: Specific gravity (kg/cm$^3$)
W: Groove width of T die (cm)
t: Groove gap of T die (cm)

The flow rate of the polypropylene resin composition and the groove width and groove gap of the T die are adequately adjusted so that the shear rate in the T die is within the above range. The flow rate of the polypropylene resin composition is preferably in a range of 150 kg/hr to 500 kg/hr from the viewpoint of extrusion stability. The groove width of the T die is preferably in a range of 500 mm to 1,000 mm. The groove gap of the T die is preferably in a range of 0.8 mm to 2 mm from the viewpoint of inner pressure in the extrusion system and accuracy of casting.

Four or more of the casting drums are preferably serially arranged from the viewpoint of controlling the arithmetic average roughness SRa, the maximum profile valley depth SRv, the profile valley side void volume, the maximum profile peak height SRp, and glossiness within adequate ranges. When the casting drums CD1, CD2, CD3, and CD4 are arranged from the upstream of the film production apparatus in this order, the surface temperatures of CD1 and CD2 are preferably 25°C to 50°C, more preferably 25°C to 45°C, further preferably 30°C to 45°C, and particularly preferably 30°C to 40°C. When the temperatures of the CD1 and CD2 are set to higher temperature, the values of SRa, SRv, the profile valley side void volume, and SRp change to higher values and the value of glossiness changes to a lower value. When the surface temperatures of CD1 and CD2 are less than 25°C, $\beta$ crystals are rarely formed in the cast sheet and thus unevenness is not generated on the film surface after the cast sheet is subjected to the subsequent stretching process. This may cause problem from the viewpoint of the element processability. On the other hand, when the surface temperatures of CD1 and CD2 are more than 50°C, many $\beta$ crystals are generated in the cast sheet and thus large unevenness is generated on the film surface after the subsequent stretching process. This may deteriorate the withstand voltage characteristics at high temperature. The surface temperatures of CD3 and CD4 are preferably 50°C to 100°C, more preferably 60°C to 98°C, further preferably 70°C to 96°C, and particularly preferably 80°C to 95°C. When the temperatures of the CD3 and CD4 are set to higher temperature, the values of SRa, SRv, the profile valley side void volume, and SRp change to higher values and the value of the glossiness changes to a lower value. When the surface temperatures of CD3 and CD4 are less than 50°C, the $\beta$ crystals are rarely formed in the cast sheet and thus unevenness is not generated on the film surface after the cast sheet is subjected to the subsequent stretching process. This may cause problem from the viewpoint of the element processability. On the other hand, when the surface temperatures of CD3 and CD4 are more than 100°C, many $\beta$ crystals are generated in the cast sheet and thus large unevenness is generated on the film surface after the subsequent stretching process. This may deteriorate the withstand voltage characteristics at high temperature. When the five or more casting drums exist, the casting drums of the fifth drum and later preferably have the same surface temperature as the surface temperature of CD4. The various physical properties, however, may be unlikely to change even when these temperatures are changed. Consequently, the surface temperature is not limited to this temperature.

The time for tightly attaching the extruded sheet onto the drum after the melted sheet discharged from T die lands to the casting drum is preferably 0.3 seconds to 0.8 seconds, more preferably 0.3 seconds to 0.7 seconds, further preferably 0.4 seconds to 0.7 seconds, and particularly preferably 0.4 seconds to 0.6 seconds for each CD1 and CD2 from the viewpoint of restricting the growth of the $\beta$crystals. When the time when each of the casting drums and the melted sheet are tightly attached is less than 0.3 seconds, many $\beta$ crystals are generated in the cast sheet and thus large unevenness is generated on the film surface after the subsequent stretching process. This may deteriorate the withstand voltage characteristics at high temperature. On the other hand, when the time when each of the casting drums and the melted sheet are tightly attached is more than 0.8 seconds, the $\beta$ crystals are rarely formed in the cast sheet and thus unevenness is not generated on the film surface after the cast sheet is subjected to the subsequent stretching process. This may cause problem from the viewpoint of the element processability. Each time when each CD3 and CD4 and the melted sheet are tightly attached is preferably 0.3 seconds or more. When the time when each of the casting drums and the melted sheet are tightly attached is less than 0.3 seconds, the melted sheet is insufficiently solidified or many $\beta$ crystals are generated in the cast sheet and thus large unevenness is generated on the film surface after the subsequent stretching process. This may deteriorate the withstand voltage characteristics at high temperature.

As described above, the reason why four or more of the casting drums are arranged is that generation of the β crystals on one surface of the sheet can be reduced by CD1 the temperature of which set to low temperature, generation of the β crystals on the other surface of the sheet can be reduced by CD2 the temperature of which is set to low temperature as similar to CD1, thereafter, generation of the α crystals on one surface of the sheet can be promoted by CD3 the temperature of which is controlled within the above range, and thereafter, generation of the α crystals on the other surface of the sheet can be promoted by CD4 the temperature of which is controlled within the above range. In other words, the crystal forms of both surfaces of the sheet can be similar forms to each other by equalizing the heat application conditions to the front and back surfaces of the film using a plurality of CDs. When the number of the casting drums is less than four, the crystal forms of one side and crystal forms of the other side of the cast sheet may often be different. In this case, the crystal form is difficult to be controlled to the preferable crystal form of the present invention. In order to achieve the characteristics of the film of the present invention, four or more casting drums preferably serially exist. As a film path where the cast sheet passes through, the surfaces of the cast sheet are preferably alternately in contact with each of the drums. For example, when one surface in contact with CD1 is determined to be an A surface and the other surface is determined to be a B surface, the cast sheet is in contact with the casting drums so that the A surface is in contact with CD1, the B surface with CD2, the A surface with CD3, and the B surface with CD4.

As methods for tightly attaching the melted sheet onto the casting drum, methods such as an electrostatic application method, an air knife method, a nip roll method, and an underwater casting method may be employed. The air knife method is preferable from the viewpoint that thickness unevenness can be reduced, the film can be formed in high speed, and the surface shape of the film can be controlled. The temperature of the air of the air knife is preferably 25°C to 50°C, more preferably 25°C to 45°C, further preferably 30°C to 45°C, and particularly preferably 30°C to 40°C from the viewpoint of controlling the arithmetic average roughness SRa, the maximum profile valley depth SRv, the profile valley side void volume, the maximum profile peak height SRp, and glossiness within adequate ranges. When the air knife temperature is set to higher temperature, the values of SRa, SRv, the profile valley side void volume, and SRp change to higher values and the value of the glossiness changes to a lower value. When the air knife temperature is set to less than 25°C, the β crystals are rarely formed in the cast sheet and thus unevenness is not generated on the film surface after the cast sheet is subjected to the subsequent stretching process. This may cause problem from the viewpoint of the element processability. On the other hand, when the air knife temperature is set to more than 50°C, many β crystals are generated in the cast sheet and thus large unevenness is generated on the film surface after the subsequent stretching process. This may deteriorate the withstand voltage characteristics at high temperature.

The atmosphere temperature under which the cast sheet is formed is preferably controlled from the viewpoint that the arithmetic average roughness SRa, the maximum profile valley depth SRv, the profile valley side void volume, the maximum profile peak height SRp, and glossiness can be controlled within adequate ranges and a uniform surface shape can be obtained. The atmosphere temperature under which the cast sheet is formed is preferably 25°C to 50°C, more preferably 25°C to 45°C, further preferably 30°C to 45°C, and particularly preferably 30°C to 40°C. When the atmosphere temperature under which the cast sheet is formed is set to higher temperature, the values of SRa, SRv, the profile valley side void volume, and SRp change to higher values and the value of the glossiness changes to lower value. When the atmosphere temperature under which the cast sheet is formed is less than 25°C, the β crystals are rarely formed in the cast sheet and thus unevenness is not generated on the film surface after the cast sheet is subjected to the subsequent stretching process. This may cause problem from the viewpoint of the element processability. On the other hand, when the atmosphere temperature under which the cast sheet is formed is more than 50°C, many β crystals are generated in the cast sheet and thus large unevenness is generated on the film surface after the subsequent stretching process. This may deteriorate the withstand voltage characteristics at high temperature.

The obtained cast sheet is biaxially stretched to generate biaxial orientation. As specific stretching conditions, first, a temperature for stretching the cast sheet in the longitudinal direction is controlled. As a method for controlling the temperature, a method for using a temperature-controlled rotating roll, a method for using a hot air oven, and other methods can be employed. The film temperature during the stretching in the longitudinal direction is preferably 100°C to 150°C, more preferably 110°C to 145°C, further preferably 120°C to 145°C, and particularly preferably 130°C to 145°C from the viewpoint of uniform stretching and stable film formation. The stretching ratio is preferably 4 times to 6.5 times, more preferably 4.5 times to 6 times, further preferably 5 times to 6 times, and particularly preferably 5.5 times to 6 times from the viewpoint of uniform stretching and stable film formation. As the stretching ratio becomes higher, the surface shape becomes more uniform and the withstand voltage characteristics at high temperature becomes more excellent. The stretching having a stretching ratio of more than 6.5 times may be likely to cause firm break in the longitudinal stretching process and firm break in the subsequent transverse stretching process.

The stretching speed in the longitudinal direction is preferably 1,000,000 %/minute to 3,500,000 %/minute, more preferably 1,000,000 %/minute to 3,000,000 %/minute, further preferably 1,500,000 %/minute to 3,000,000 %/minute, and particularly preferably 2,000,000 %/minute to 3,000,000 %/minute from the viewpoint of uniform stretching and stable film formation. When the stretching speed in the longitudinal direction is less than 1,000,000 %/minute, the film having uniform surface shape is not obtained and thus the withstand voltage characteristics at high temperature may deteriorate. On the other hand, when the stretching speed in the longitudinal direction is more than 3,500,000 %/minute, the film break during the film formation may occur. A method for calculating the stretching speed in the longitudinal direction is represented by the formula (2). The stretching zone where the unstretched sheet is stretched by the rotating roll method is determined to be a tangential distance between rolls having different peripheral speeds. The stretching speed is assumed to be uniform in the stretching zone.

$$\text{Stretching speed (\%/minute)} = (MDX-1) \times 100/(L/V) \cdots (2)$$

where MDX: Stretching ratio in longitudinal direction (times)
L: Stretching zone (m)
V: Film formation speed after stretching (m/minute)

During the stretching in the longitudinal direction of the film, what is called neckdown, which is a phenomenon of reducing the film width, is observed. The neckdown ratio (Film width after stretching/Film width before stretching $\times$ 100) is preferably 90% to 99% from the viewpoint of thickness unevenness.

Subsequently, the film is introduced into a tenter type stretching machine with the film edges being gripped. The introduced film is heated to preferably 140°C to 165°C, more preferably 142°C to 163°C, further preferably 144°C to 160°C, and particularly preferably 145°C to 155°C and stretched 8 times to 15 times, more preferably 9 times to 14 times, further preferably 10 times to 13 times, and particularly preferably 10 times to 12 times in the width direction from the viewpoint of uniform stretching and stable film formation. The transverse stretching speed at this transverse stretching is preferably 15,000 %/minute to 45,000 %/minute, more preferably 18,000 %/minute to 40,000 %/minute, further preferably 20,000 %/minute to 35,000 %/minute, and particularly preferably 25,000 %/minute to 30,000 %/minute from the viewpoint of uniform stretching and stable film formation.

Subsequently, the film is thermally treated. The heat treatment may be carried out as it is in the tenter without changing the heat treatment temperature. The treatment temperature, however, is preferably 147°C to 167°C, more preferably 150°C to 165°C, further preferably 152°C to 163°C, and particularly preferably 155°C to 160°C from the viewpoint of the withstand voltage characteristics at high temperature. The heat treatment may be carried out while the film is being relaxed in the longitudinal direction and/or the width direction. In particular, the relaxation ratio in the width direction is preferably set to 5% to 15%, more preferably 8% to 13%, further preferably 9% to 12%, and particularly preferably 10% to 12% from the viewpoint of thermal dimensional stability in the width direction.

Finally, when a metal film is formed on the film by deposition, corona discharge treatment in air, in nitrogen, in carbon dioxide gas, or in a mixed gas thereof is carried out to the surface of the biaxially stretched polypropylene film where the deposition of the metal film is carried out from the viewpoint of improving adhesion of the deposited metal and thus a metal film-laminated film can be obtained.

The biaxially oriented polypropylene film of the present invention is preferably used as the dielectric substance for a capacitor. The type of the capacitor is not particularly limited. Specifically, the capacitor may be either foil-wound capacitor or metal deposited film capacitor from the viewpoint of electrode configuration. An oil immersion type capacitor impregnated with insulating oil and a dry type capacitor in which insulating oil is not used at all are also preferably used. From the viewpoint of the shape, the capacitor may be either winding type capacitor or lamination type capacitor. The biaxially oriented polypropylene film of the present invention is particularly preferably used as a metal deposited film capacitor from the viewpoint of its characteristics.

In the present invention, the metal film-laminated film is preferably formed by providing a metal film on at least one surface of the above biaxially oriented polypropylene film. The method for forming the metal film-laminated film is not particularly limited. For example, a method for depositing aluminum onto at least one surface of the film to provide a metal film such as aluminum deposited film that acts as internal electrodes in a film capacitor is preferably employed. At the time of providing the aluminum film, other metal components such as nickel, copper, gold, silver, chromium, and zinc may be deposited simultaneously or sequentially with aluminum. A protection layer formed of oil and the like may also be provided on the deposited film.

The thickness of the metal film of the metal film-laminated film is preferably 20 nm to 100 nm from the viewpoint of electrical properties and self-heel properties of the film capacitor. From the same reason, the surface resistance value of the metal film is preferably 1 $\Omega/\square$ to 20 $\Omega/\square$. The surface resistance value can be controlled by metal species to be used and a film thickness.

In the present invention, aging treatment or thermal treatment of the metal film-laminated film may be carried out at specific temperature after the metal film is formed, if needed. Coating using polyphenylene oxide and the like may be applied to at least one surface of the metal film-laminated film for insulation or other purposes.

From thus obtained metal film-laminated film, a film capacitor can be obtained by laminating or winding using various methods. A preferable method for producing a winding type capacitor will be described below. The method, however, is not particularly limited to this method.

First, aluminum was deposited in vacuo on one surface of the biaxially oriented polypropylene film of the present invention. At this deposition, aluminum is deposited in a stripe shape formed in a longitudinal direction of the film. The gaps between the aluminum-deposited parts having the stripe shape are margin parts where aluminum is not deposited. Subsequently, blades are put into the center of each of the deposited parts and the center of each of the margin parts on the surface to slit the deposited film. Winding reels in which tapes having a surface having a margin at one side are wound are prepared. From the winding reels in which tapes having a margin at right side or left side are wound, the winding reel in which the tape having a margin at right side is wound and the winding reel in which the tape having a margin at left side is wound are selected one by one. These two tapes are overlapped and wound so that the vapor deposition parts protrude from the margin parts in the width direction to give a wound body. The winding type film capacitor can be obtained by pulling out a core material from this wound body and pressing the remaining part, thermally spraying melted metal at both ends to form external electrodes, and subsequently welding lead wires to the melted metal sprayed parts. Film capacitors are widely applied for vehicles, home electric appliances (for example, televisions and refrigerators), general noise absorbing, automobiles (for example, hybrid cars, power windows, and wipers), and power supplies. The film capacitor of the present invention also can be suitably used for these applications.

[Example]

Hereinafter, the present invention will be described in detail with reference to Examples. Characteristics are measured and evaluated by the following method.

(1) Mesopentad fraction (mmmm)

The mesopentad fraction (mmmm) of a polypropylene resin sample dissolved in a solvent was determined using $^{13}$C-NMR under the following conditions (Reference Literature: Shinban Koubunshi Bunseki Handbook (Polymer Analysis Handbook New Edition), edited by THE JAPAN SOCIETY FOR ANALYTICAL CHEMISTRY, Polymer Analysis Research Council, 1995, pp. 609-611).

A. Measurement conditions

Apparatus: DRX-500 manufactured by Bruker Corporation
Measurement nucleus: $^{13}$C nucleus (resonance frequency: 125.8 MHz)
Measured concentration: 10% by weight
Solvent: Benzene/Deuterated orthodichlorobenzene = 1:3 mixed solution in mass ratio
Measurement temperature: 130°C
Spin rotation speed: 12 Hz
NMR sample tube: 5 mm tube
Pulse width: 45° (4.5 μs)
Pulse repetition time: 10 seconds
Data points: 64 K
Conversion count: 10,000 times
Measurement mode: Complete decoupling

B. Analysis conditions

Fourier transform analysis was carried out with a line broadening factor (LB) being set to 1.0 and the mmmm peak was determined to be 21.86 ppm. Peak separation was carried out using WINFIT software (manufactured by Bruker Corporation). In this peak separation, peak separation was carried out as described below from the high magnetic field side and automatic fitting was further carried out using attached software. After the peak separation was optimized, the total of the peak fraction of mmmm was determined. The above measurement was carried out 5 times and the average value of the measured values was determined to be the mesopentad fraction (mmmm) of this sample.

Peaks

(a) mrrm
(b) (c) rrrm (separated as two peaks)
(d) rrrr
(e) mrmr
(f) mrmm + rmrr
(g) mmrr
(h) rmmr
(i) mmmr
(j) mmmm

(2) Melt flow rate (MFR)

The melt flow rate was measured in accordance with JIS K7210 (1995) Condition M (230°C, 2.16 kg).

(3) Arithmetic average roughness SRa, maximum profile valley depth SRv, and maximum profile peak height SRp

These characteristics were measured in accordance with JIS B-0601 (1982) using a non-contact three-dimensional fine shape measuring instrument (ET-30HK) and a three-dimensional roughness analyzer (MODEL SPA-11) manufactured by Kosaka Laboratory Ltd. The measurement was carried out ten times in the longitudinal direction and the arithmetic average roughness SRa, maximum profile valley depth SRv, and maximum profile peak height SRp were determined to be the average values of the ten-time measurement. Detail conditions for the single measurement were as follows.

A. Measurement conditions

Measurement surface treatment: Aluminum was vacuum deposited on a measuring surface and a non-contact method was employed.

Measurement direction: Width direction of film
Feeding speed in width direction: 0.1 mm/sec
Measurement range (width direction $\times$ length direction): 1.0 mm $\times$ 0.249 mm
Reference plane in dimension in height direction: LOWER (lower side)
Sampling interval in width direction: 2 $\mu$m
Sampling interval in longitudinal direction: 10 $\mu$m
Sampling Number in longitudinal direction: 25
Cutoff: 0.25 mm/sec
Magnification in width direction: 200 times
Magnification in longitudinal direction: 20,000 times
Waviness and roughness cut: None

B. Measurement method

A dedicated sample holder was used for measuring the film. The sample holder was a removable two metal plates having circular holes in the center. The sample was sandwiched between the two metal plates and the film was placed with tension so that the film was reached to all four sides of the sample holder and was fixed. The film in the central circular part was measured.

(4) Profile valley side void volume

The profile valley side void volume was measured using a non-contact surface layer/cross-sectional shape measurement system VertScan2.0 (type: R3300GL-Lite-AC) manufactured by Ryoka Systems Inc. The measurement was carried out ten times at any place and the profile valley side void volume was determined to be the average value of the ten-time measurement. Detail conditions for the single measurement were as follows. A single visual field (the visual field area is 1,252 $\times$ 939 $\mu$m) was observed in the single measurement. The visual field area per visual field may be different depending on the accuracy of the objective lens and thus the measurement may cause an error within 5%.

A. Measurement conditions

CCD camera: SONY HR-57 1/2

Objective lens: 10×

Barrel: 0.5 × BODY

Wavelength filters: 530 White

Measurement mode: Wave

Field size: 640 × 480

Scan Range: 5 $\mu$m at start and -0.5 $\mu$m at stop

B. Measurement method

A dedicated sample holder was used for measuring the film. The sample holder was a removable two metal plates having circular holes in the center. The sample was sandwiched between the two metal plates and the film was placed with tension so that the film was reached to all four sides of the sample holder and was fixed. The film in the central circular part was measured. Subsequently, the obtained data were subjected to surface correction by fourth order polynomial approximation. After the waviness component was removed, complete interpolation was carried out as the interpolation process.

C. Analysis method

The image data obtained by the above measurement were analyzed using a bearing function being an analysis tool in the image analysis software VS-Viewer of VertScan2.0. In the assignment of height region, the threshold of the profile valley height was set to -50 nm (that is, profile valley side voids having a depth of 0.05 $\mu$m or more were assigned). Thereafter, the value described as the profile valley side void volume was read. The read value was rounded off so as to be two significant figures.

(5) Glossiness

The glossiness was measured in accordance with JIS K7105 (1981) under the conditions of an incident angle of 60° and an acceptance angle of 60° using a digital variable angle gloss meter UGV-5D manufactured by Suga Test Instruments Co., Ltd. This measurement was carried out five times. The glossiness of the biaxially oriented polypropylene film of the present invention was determined to be the average value of the measured values.

(6) Film thickness t

The thickness of a micrometer method was measured in accordance with JIS C2330 (2001) 7. 4. 1. 1.

(7) Ash content

The ash content was measured in accordance with JIS C2330 (1995). An initial mass $W_0$ of the biaxially oriented polypropylene film was placed in a platinum crucible. First, the biaxially oriented polypropylene film was sufficiently burned by a gas burner, and then the sample was treated in an electric furnace at 750°C to 800°C for one hour to form ash completely. The mass of the obtained ash $W_1$ was measured to determine the ash content in accordance with the following formula.

$$\mathtt{Ash\ content\ =\ (W_1 - W_0)\ \times\ 1,000,000\ (ppm)}$$

(8) Total content of inorganic particles and/or organic particles

5 g of a polypropylene film sample was dissolved in 1,000 ml of xylene at 135°C. This resultant solution was filtered while the solution was being maintained in high temperature. The insoluble part was taken out and sufficiently washed with xylene of 135°C. The washed insoluble part was left to stand for 12 hours in a vacuum dryer in which the temperature was raised to 100°C and thereafter, the dried insoluble part was weighted (Y (g)). Calculation was carried out in accordance with the following formula using an accurately measured weight ($Y_0$ (g)) of the 5 g sample.

$$\texttt{Particle content (\% by mass) = } (Y/Y_0) \times 100$$

(9) Element processability in capacitor production

To one surface of the biaxially oriented polypropylene film obtained in each Example and Comparative Example described below, aluminum was vacuum-deposited so as to be 8 $\Omega/\square$ using a vacuum deposition machine manufactured by ULVAC, Inc. At this deposition, aluminum was deposited in a stripe shape having a margin formed in a longitudinal direction of the film (repeating a width of a deposition part of 39.0 mm and a width of a margin part of 1.0 mm). Subsequently, blades were put into the center of each of the deposited parts and the center of each of the margin parts to slit the deposited film. Winding reels in which tapes having a total width of 20 mm and a margin part of 0.5 mm at either right edge or left edge were wound were prepared. From the winding reels, a winding reel in which the tape having a margin at right side is wound and a winding reel in which the tape having a margin at left side is wound are selected one by one. These two tapes are overlapped so that the vapor deposition part protrudes by 0.5 mm from the margin part in the width direction and the overlapped tape was wound to give a wound body having a capacitance of 10 $\mu$F. KAW-4NHB manufactured by KAIDO MFG. CO., LTD. was used for winding the element.

The product was observed from the start of the winding to the end of the winding at the time of the capacitor production. The product that generated winkles or misalignment was determined to be rejected. The element processability was evaluated based on the number of rejected products. Fifty of the capacitor elements were produced and the element processability was evaluated in accordance with the following criteria.

○ (Excellent): No rejected product
Δ (Good): One to two rejected products
✕ (Disapproved): Three of more rejected products

(10) Withstand voltage characteristics at high temperature

The dielectric breakdown of the biaxially oriented polypropylene film was measured in accordance with JIS C2330 (2001) by placing electrodes in a hot air oven in which the temperature was controlled to 125°C. The measurement was carried out five times and the average value of the measured values was determined. The determined value was divided by the film thickness determined above to determine the dielectric breakdown voltage per 1 $\mu$m (V/$\mu$m) at high temperature. The withstand voltage characteristics at high temperature was evaluated in accordance with the following criteria based on the above dielectric breakdown voltage at high temperature.

○ (Excellent): 450 V/$\mu$m or more
Δ (Good): 400 V/$\mu$m or more and less than 450 V/$\mu$m
✕ (Poor): Less than 400 V/$\mu$m

(Example 1)

A. Production of polypropylene resin composition

Anhydrous magnesium chloride, decane, and 2-ethylhexyl alcohol were mixed. To the heated mixed solution, phthalic anhydride was added and the resultant mixture was further stirred. The solution was cooled and, thereafter, the solution was added dropwise to titanium tetrachloride cooled to -20°C. Subsequently, the temperature of the solution was raised and diisobutyl phthalate was added. The resultant mixture was stirred and, thereafter, the mixture was filtered to give a solid. The obtained solid was washed with decane and hexane to give a titanium catalyst used for propylene polymerization.

Propylene was polymerized using the above titanium catalyst, triethylaluminum as a cocatalyst, and hydrogen as a chain transfer agent. After the obtained product was deactivated, the product was sufficiently washed with propylene monomer to give a polypropylene resin. This polypropylene resin has a MFR of 2.5 g/10 minutes and a mesopentad fraction (mmmm) of 0.980.

0.1% by mass of BHT as an antioxidant and 0.2% by mass of Irganox-1010 also as an antioxidant were added to 99.7% by mass of the obtained polypropylene resin. Thereafter, the resultant polypropylene resin was kneaded at a temperature of 260°C and formed in the form of pellets to give a polypropylene resin composition.

B. Production of film

100% by mass of the polypropylene resin composition was fed to a single-screw melt extruder and melt extrusion was carried out at 250°C. Foreign matters were removed with a sintered filter that removed foreign matters having a size of 25 $\mu$m or more. The shear rate applied in a T die during extrusion was 300 sec$^{-1}$. The melted polypropylene resin composition discharged from T die was tightly attached onto four serial casting drums to give a melted sheet. At this process, the diameters of the four serial casting drums were the same. The names of casting drums were assigned as CD1, CD2, CD3, and CD4 from the upstream of the apparatus in this order. The film path was determined as the respective surfaces of the cast sheet were alternately in contact with the respective drums. The surface temperature of CD1 and CD2 was 30°C and the surface temperature of CD3 and CD4 was 90°C. Each time for tightly attaching the melted sheet onto each of the casting drums of CD1, CD2, CD3, and CD4 was 0.4 seconds. In order to tightly attach the sheet on the first casting drum CD1, an air knife and blown air at end spots were used. At this time, the air temperature of the air knife was adjusted to 30°C. The atmosphere temperature in the casting process was also adjusted to 30°C. Subsequently, the cast sheet was preheated using a heated roll and the film was heated so that the film temperature was reached to 145°C. Thereafter, the preheated cast sheet was stretched 5.5 times in the longitudinal direction. In this stretching, the stretching speed in the longitudinal direction was 2,000,000 %/minute and the neckdown ratio was 98%. Subsequently, the end parts of the film were gripped with clips and the film was stretched 10 times at 155°C in the width direction at a stretching speed of 30,000 %/min. Furthermore, heat treatment at 158°C for 7 seconds was carried out to relax the film in a ratio of 12% in the width direction. Thereafter, the film was slowly cooled to room temperature. Thereafter, corona discharge treatment was applied to one surface of the film at a treatment strength of 25 W·min/m$^2$ and the edge parts of the film gripped by the clips were cut to remove. Here, one surface that was in contact with CD1 and to which corona discharge treatment was applied was determined to be the A surface and the other surface that was in contact with CD2 and to which corona discharge treatment was not applied was determined to be the B surface. The film the edge parts of which were removed was wound by a winder to give the biaxially oriented polypropylene film having a thickness of 2.5 $\mu$m. Physical properties of the obtained film are listed in Table 1.

(Example 2)

The biaxially oriented polypropylene film having a thickness of 2.5 $\mu$m was obtained by preparing the film in the same method as the method in Example 1 except that the surface temperatures of CD1 and CD2 were set to 45°C. Physical properties of the obtained film are listed in Table 1.

(Example 3)

The biaxially oriented polypropylene film having a thickness of 2.5 $\mu$m was obtained by preparing the film in the same method as the method in Example 1 except that the surface temperatures of CD1 and CD2 were set to 50°C. Physical properties of the obtained film are listed in Table 1.

(Example 4)

The biaxially oriented polypropylene film having a thickness of 2.5 $\mu$m was obtained by preparing the film in the same method as the method in Example 1 except that the surface temperatures of CD1 and CD2 were set to 25°C. Physical properties of the obtained film are listed in Table 1.

(Example 5)

The biaxially oriented polypropylene film having a thickness of 2.5 $\mu$m was obtained by preparing the film in the same method as the method in Example 1 except that the surface temperatures of CD3 and CD4 were set to 70°C. Physical properties of the obtained film are listed in Table 1.

(Example 6)

The biaxially oriented polypropylene film having a thickness of 2.5 $\mu$m was obtained by preparing the film in the same method as the method in Example 1 except that the surface temperatures of CD3 and CD4 were set to 50°C. Physical properties of the obtained film are listed in Table 1.

(Example 7)

The biaxially oriented polypropylene film having a thickness of 2.5 $\mu$m was obtained by preparing the film in the same method as the method in Example 1 except that the surface temperatures of CD3 and CD4 were set to 100°C. Physical properties of the obtained film are listed in Table 1.

(Examples 8)

The biaxially oriented polypropylene film having a thickness of 2.5 $\mu$m was obtained by preparing the film in the same method as the method in Example 1 except that each time for tightly attaching the melted sheet onto each of the casting drums of CD1, CD2, CD3, and CD4 was 0.3 seconds. Physical properties of the obtained film are listed in Table 1.

(Example 9)

The biaxially oriented polypropylene film having a thickness of 2.5 $\mu$m was obtained by preparing the film in the same method as the method in Example 1 except that each time for tightly attaching the melted sheet onto each of the casting drums of CD1, CD2, CD3, and CD4 was 0.7 seconds. Physical properties of the obtained film are listed in Table 1.

(Example 10)

The biaxially oriented polypropylene film having a thickness of 2.5 $\mu$m was obtained by preparing the film in the same method as the method in Example 1 except that each time for tightly attaching the melted sheet onto each of the casting drums of CD1, CD2, CD3, and CD4 was 0.8 seconds. Physical properties of the obtained film are listed in Table 1.

(Example 11)

The biaxially oriented polypropylene film having a thickness of 2.5 $\mu$m was obtained by preparing the film in the same method as the method in Example 1 except that the air temperature of the air knife was set to 50°C. Physical properties of the obtained film are listed in Table 1.

(Example 12)

The biaxially oriented polypropylene film having a thickness of 2.5 $\mu$m was obtained by preparing the film in the same method as the method in Example 1 except that the atmosphere temperature in the casting process was set to 50°C. Physical properties of the obtained film are listed in Table 1.

(Example 13)

The biaxially oriented polypropylene film having a thickness of 2.5 $\mu$m was obtained by preparing the film in the same method as the method in Example 1 except that the surface temperatures of CD1 and CD2 were set to 40°C. Physical properties of the obtained film are listed in Table 1.

(Example 14)

The biaxially oriented polypropylene film having a thickness of 2.5 $\mu$m was obtained by preparing the film in the same method as the method in Example 1 except that each time for tightly attaching the melted sheet onto each of the casting drums of CD1, CD2, CD3, and CD4 was 0.6 seconds. Physical properties of the obtained film are listed in Table 1.

(Comparative Example 1)

The biaxially oriented polypropylene film having a thickness of 2.5 $\mu$m was obtained by preparing the film in the same method as the method in Example 1 except that one casting drum was used instead of four casting drums, only one surface of the cast sheet was in contact with the cast drum having a surface temperature of 30°C, and the time for tightly attaching the melted sheet onto the casting drum was 1.6 seconds. Here, one surface that was in contact with the casting drum and to which corona discharge treatment was applied was determined to be the A surface and the other surface that was not in contact with the casting drum and to which corona discharge treatment was not applied was determined to be the B surface. Physical properties of the obtained film are listed in Table 2.

(Comparative Example 2)

The biaxially oriented polypropylene film having a thickness of 2.5 $\mu$m was obtained by preparing the film in the same method as the method in Comparative Example 1 except that 99.5% by mass of the polypropylene resin composition described in Example 1 and 0.5% by mass of silica particles prepared by a sol-gel method (average particle diameter 0.3 $\mu$m) manufactured by Tokuyama Corporation were fed into the single-screw melt extruder. Physical properties of the obtained film are listed in Table 2.

(Comparative Example 3)

The biaxially oriented polypropylene film having a thickness of 2.5 $\mu$m was obtained by preparing the film in the same method as the method in Example 1 except that the two casting drums were used instead of four casting drums, one surface and the other surface of the cast sheet were alternately in contact with the two casting drums, the surface temperature of the first casting drum was set to 30°C and the surface temperature of the second casting drum was set to 95°C, and each time for tightly attaching the melted sheet onto each of the casting drums was 0.8 seconds. Here, one surface that was in contact with the first casting drum and to which corona discharge treatment was applied was determined to be the A surface and the other surface that was in contact with the second casting drum and to which corona discharge treatment was not applied was determined to be the B surface. Physical properties of the obtained film are listed in Table 2.

(Comparative Example 4)

The biaxially oriented polypropylene film having a thickness of 2.5 $\mu$m was obtained by preparing the film in the same method as the method in Example 1 except that the surface temperatures of CD1 and CD2 were set to 55°C. Physical properties of the obtained film are listed in Table 2.

(Comparative Example 5)

The biaxially oriented polypropylene film having a thickness of 2.5 $\mu$m was obtained by preparing the film in the same method as the method in Example 1 except that the surface temperatures of CD3 and CD4 were set to 45°C. Physical properties of the obtained film are listed in Table 2.

(Comparative Example 6)

The biaxially oriented polypropylene film having a thickness of 2.5 $\mu$m was obtained by preparing the film in the same method as the method in Example 1 except that the surface temperatures of CD3 and CD4 were set to 105°C. Physical properties of the obtained film are listed in Table 2.

(Comparative Example 7)

The biaxially oriented polypropylene film having a thickness of 2.5 $\mu$m was obtained by preparing the film in the same method as the method in Example 1 except that each time for tightly attaching the melted sheet onto each of the casting drums of CD1, CD2, CD3, and CD4 was 0.2 seconds. Physical properties of the obtained film are listed in Table 2.

(Comparative Example 8)

The biaxially oriented polypropylene film having a thickness of 2.5 $\mu$m was obtained by preparing the film in the same method as the method in Example 1 except that each time for tightly attaching the melted sheet onto each of the casting drums of CD1, CD2, CD3, and CD4 was 1.0 seconds. Physical properties of the obtained film are listed in Table 2.

(Comparative Example 9)

The biaxially oriented polypropylene film having a thickness of 2.5 $\mu$m was obtained by preparing the film in the same method as the method in Example 1 except that the controller of the air temperature of the air knife was turned off and the air temperature was allowed to naturally change (55°C). Physical properties of the obtained film are listed in Table 2.

(Comparative Example 10)

The biaxially oriented polypropylene film having a thickness of 2.5 $\mu$m was obtained by preparing the film in the same method as the method in Example 1 except that the controller of the atmosphere temperature in the casting process was turned off and the atmosphere temperature was allowed to naturally change (55°C). Physical properties of the obtained film are listed in Table 2.

Table 1

| | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| SRa | A surface | μm | 0.04 | 0.05 | 0.05 | 0.03 | 0.03 | 0.03 | 0.05 | 0.06 | 0.03 | 0.03 | 0.05 | 0.05 | 0.05 | 0.04 |
| | B surface | μm | 0.03 | 0.04 | 0.04 | 0.02 | 0.02 | 0.02 | 0.04 | 0.04 | 0.02 | 0.02 | 0.03 | 0.03 | 0.04 | 0.03 |
| SRv | A surface | μm | 0.25 | 0.33 | 0.45 | 0.22 | 0.28 | 0.20 | 0.48 | 0.50 | 0.28 | 0.21 | 0.48 | 0.49 | 0.27 | 0.25 |
| | B surface | μm | 0.18 | 0.25 | 0.41 | 0.15 | 0.20 | 0.13 | 0.41 | 0.40 | 0.19 | 0.14 | 0.41 | 0.41 | 0.20 | 0.19 |
| Profile valley side void volume | A surface | μm$^3$ | 8,000 | 11,000 | 12,000 | 6,400 | 7,100 | 7,500 | 10,000 | 14,000 | 7,200 | 6,500 | 9,800 | 10,000 | 9,500 | 7,600 |
| | B surface | μm$^3$ | 4,600 | 5,800 | 8,500 | 4,100 | 4,800 | 4,900 | 8,200 | 8,000 | 4,100 | 2,800 | 8,100 | 8,200 | 5,000 | 4,300 |
| SRp | A surface | μm | 1.0 | 1.1 | 1.2 | 0.96 | 0.99 | 0.96 | 1.2 | 1.2 | 0.99 | 0.96 | 1.1 | 1.1 | 1.1 | 1.0 |
| | B surface | μm | 0.61 | 0.88 | 0.96 | 0.53 | 0.60 | 0.60 | 0.97 | 0.95 | 0.60 | 0.62 | 0.96 | 0.96 | 0.70 | 0.61 |
| SRp/SRv | A surface | - | 4.0 | 3.3 | 2.7 | 4.4 | 3.5 | 4.8 | 2.5 | 2.4 | 3.5 | 3.4 | 2.3 | 2.2 | 4.1 | 4.0 |
| | B surface | - | 3.4 | 3.5 | 2.3 | 3.5 | 3.0 | 4.6 | 2.4 | 2.3 | 3.2 | 4.4 | 2.3 | 2.3 | 3.5 | 3.2 |
| SRv/t | A surface | - | 0.10 | 0.13 | 0.18 | 0.088 | 0.11 | 0.080 | 0.19 | 0.20 | 0.11 | 0.084 | 0.19 | 0.20 | 0.11 | 0.10 |
| | B surface | - | 0.072 | 0.10 | 0.16 | 0.060 | 0.080 | 0.052 | 0.16 | 0.16 | 0.076 | 0.056 | 0.16 | 0.16 | 0.080 | 0.076 |
| Glossiness | A surface | % | 136 | 133 | 130 | 140 | 138 | 144 | 134 | 127 | 138 | 142 | 134 | 134 | 128 | 137 |
| | B surface | % | 138 | 135 | 132 | 142 | 140 | 146 | 136 | 131 | 140 | 144 | 135 | 135 | 130 | 138 |
| Film thickness t | | μm | 2.5 | 2.5 | 2.5 | 2.5 | 2.5 | 2.5 | 2.5 | 2.5 | 2.5 | 2.5 | 2.5 | 2.5 | 2.5 | 2.5 |
| Ash content | | ppm | 15 | 15 | 15 | 15 | 15 | 15 | 15 | 15 | 15 | 15 | 15 | 15 | 15 | 15 |
| Element processability | | | ○ | ○ | ○ | △ | △ | △ | ○ | ○ | △ | △ | ○ | ○ | ○ | ○ |
| Withstand voltage characteristics at high temperature | | | ○ | △ | △ | ○ | ○ | ○ | △ | △ | ○ | ○ | △ | △ | ○ | ○ |

Table 2

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| SRa | A surface | $\mu$m | 0.01 | 0.02 | 0.02 | 0.06 | 0.01 | 0.06 | 0.06 | 0.01 | 0.06 | 0.06 |
| | B surface | $\mu$m | 0.02 | 0.03 | 0.01 | 0.04 | 0.01 | 0.04 | 0.05 | 0.02 | 0.04 | 0.04 |
| SRv | A surface | $\mu$m | 0.05 | 0.07 | 0.10 | 0.55 | 0.04 | 0.54 | 0.60 | 0.04 | 0.56 | 0.55 |
| | B surface | $\mu$m | 0.07 | 0.09 | 0.07 | 0.52 | 0.02 | 0.51 | 0.54 | 0.07 | 0.52 | 0.51 |
| Profile valley side void volume | A surface | $\mu$m$^3$ | 0.25 | 12 | 0.68 | 15,000 | 0.21 | 13,000 | 18,000 | 0.25 | 14,000 | 13,000 |
| | B surface | $\mu$m$^3$ | 0.45 | 25 | 0.23 | 11,000 | 0.11 | 11,000 | 14,000 | 0.28 | 12,000 | 12,000 |
| SRp | A surface | $\mu$m | 0.22 | 0.32 | 0.28 | 1.3 | 0.26 | 1.4 | 1.4 | 0.22 | 1.2 | 1.2 |
| | B surface | $\mu$m | 0.28 | 0.41 | 0.25 | 1.1 | 0.24 | 1.2 | 1.3 | 0.26 | 1.1 | 1.1 |
| SRp/SRv | A surface | - | 4.4 | 4.6 | 2.8 | 2.4 | 6.5 | 2.6 | 2.3 | 5.5 | 2.1 | 2.2 |
| | B surface | - | 4.0 | 4.6 | 3.6 | 2.1 | 12 | 2.4 | 2.4 | 3.7 | 2.1 | 2.2 |
| SRv/t | A surface | - | 0.020 | 0.028 | 0.040 | 0.22 | 0.016 | 0.22 | 0.24 | 0.016 | 0.22 | 0.22 |
| | B surface | - | 0.028 | 0.036 | 0.028 | 0.21 | 0.008 | 0.20 | 0.22 | 0.028 | 0.21 | 0.20 |
| Glossiness | A surface | % | 155 | 153 | 152 | 129 | 151 | 129 | 119 | 151 | 131 | 131 |
| | B surface | % | 152 | 150 | 155 | 131 | 152 | 131 | 123 | 149 | 133 | 134 |
| Film thickness t | | $\mu$m | 2.5 | 2.5 | 2.5 | 2.5 | 2.5 | 2.5 | 2.5 | 2.5 | 2.5 | 2.5 |
| Ash content | | ppm | 15 | 5,000 | 15 | 15 | 15 | 15 | 15 | 15 | 15 | 15 |
| Element processability | | | × | ○ | × | ○ | × | ○ | ○ | × | ○ | ○ |
| Withstand voltage characteristics at high temperature | | | ○ | × | ○ | × | ○ | × | × | ○ | × | × |

Industrial Applicability

When the biaxially oriented polypropylene film of the present invention is used as the dielectric substance for a capacitor, the film can be provided as the biaxially oriented polypropylene film having the excellent element processability and withstand voltage characteristics at high temperature due to the controlled surface shape.

**Claims**

1. A biaxially oriented polypropylene film comprising a polypropylene resin as a main component, the biaxially oriented polypropylene film having an arithmetic average roughness SRa on at least one surface of 0.03 $\mu$m to 0.10 $\mu$m, a maximum profile valley depth SRv on at least one surface of 0.10 $\mu$m to 0.50 $\mu$m, wherein the SRa and SRv are measured in accordance with JIS B-0601 edition 1982, and being **characterized by** a profile valley side void volume having a depth of 0.05 $\mu$m or more existing in a visual field area in a range of 1,252 $\mu$m $\times$ 939 $\mu$m on at least one surface measured by non-contact surface shape measurement of 100 $\mu$m$^3$ to 10,000 $\mu$m$^3$, wherein the profile valley side void volume is measured according to the method given in the description.

2. The biaxially oriented polypropylene film according to claim 1, wherein a maximum profile peak height SRp on at least one surface of the biaxially oriented polypropylene film is 0.30 $\mu$m to 1.0 $\mu$m, wherein the maximum profile peak height SRp is measured in accordance with JIS B-0601 edition 1982.

3. The biaxially oriented polypropylene film according to claim 1 or 2, wherein a ratio SRp/SRv of the maximum profile valley depth SRv and maximum profile peak height SRp on at least one surface of the biaxially oriented polypropylene film is 2.0 or more.

4. The biaxially oriented polypropylene film according to any one of claims 1 to 3, wherein a ratio SRv/t of a film thickness t and the maximum profile valley depth SRv on at least one surface of the biaxially oriented polypropylene film is 0.30 or less.

5. The biaxially oriented polypropylene film according to any one of claims 1 to 4, wherein an ash content is 50 ppm or less.

6. The biaxially oriented polypropylene film according to any one of claims 1 to 5, wherein a total content of at least one of inorganic particles and organic particles is 1% by mass or less.

7. The biaxially oriented polypropylene film according to any one of claims 1 to 6, wherein the biaxially oriented polypropylene film is used as a dielectric substance for a capacitor.

8. A metal film-laminated film made by forming a metal film on at least one surface of the biaxially oriented polypropylene film according to any one of claims 1 to 7.

9. A film capacitor made by winding the metal film-laminated film according to claim 8.

**Patentansprüche**

1. Biaxial orientierter Polypropylenfilm, der ein Polypropylenharz als Hauptkomponente aufweist, wobei der biaxial orientierte Polypropylenfilm eine arithmetische durchschnittliche Rauheit SRa auf mindestens einer Oberfläche von 0,03 $\mu$m bis 0,10 $\mu$m hat, eine maximale Profiltal-Tiefe SRv auf mindestens einer Oberfläche von 0,10 $\mu$m bis 0,50 $\mu$m hat, wobei SRa und SRv gemäß JIS B-0601 Ausgabe 1982 gemessen sind, und **dadurch gekennzeichnet, dass** er ein profiltalseitiges Hohlraumvolumen mit einer Tiefe von 0,05 $\mu$m oder mehr, das in einem Gesichtsfeldbereich in einem Bereich von 1.252 $\mu$m $\times$ 939 $\mu$m auf mindestens einer Oberfläche vorhanden ist, gemessen durch berüh-rungslose Oberflächenformmessung, von 100 $\mu$m$^3$ bis 10.000 $\mu$m$^3$ hat, wobei das profiltalseitige Hohlraumvolumen gemäß dem in der Beschreibung angegebenen Verfahren gemessen wird.

2. Biaxial orientierter Polypropylenfilm nach Anspruch 1, wobei eine maximale Profilpeakhöhe SRp auf mindestens einer Oberfläche des biaxial orientierten Polypropylenfilms 0,30 $\mu$m bis 1,0 $\mu$m beträgt;

wobei die maximale Profilpeakhöhe SRp gemäß JIS B-0601 Ausgabe 1982 gemessen ist.

**3.** Biaxial orientierter Polypropylenfilm nach Anspruch 1 oder 2, wobei ein Verhältnis SRp/SRv der maximalen Profiltaltiefe SRv und der maximalen Profilpeakhöhe SRp auf mindestens einer Oberfläche des biaxial orientierten Polypropylenfilms 2,0 oder mehr beträgt.

**4.** Biaxial orientierter Polypropylenfilm nach einem der Ansprüche 1 bis 3, wobei ein Verhältnis SRv/t einer Filmdicke t und der maximalen Profiltaltiefe SRv auf mindestens einer Oberfläche des biaxial orientierten Polypropylenfilms 0,30 oder weniger beträgt.

**5.** Biaxial orientierter Polypropylenfilm nach einem der Ansprüche 1 bis 4, wobei ein Aschegehalt 50 ppm oder weniger beträgt.

**6.** Biaxial orientierter Polypropylenfilm nach einem der Ansprüche 1 bis 5, wobei ein Gesamtgehalt von anorganischen Partikeln und/oder organischen Partikeln 1 Massen-% oder weniger beträgt.

**7.** Biaxial orientierter Polypropylenfilm nach einem der Ansprüche 1 bis 6, wobei der biaxial orientierte Polypropylenfilm als dielektrische Substanz für einen Kondensator verwendet wird.

**8.** Metallfilm-laminierter Film, hergestellt durch Bilden eines Metallfilms auf mindestens einer Oberfläche des biaxial orientierten Polypropylenfilms nach einem der Ansprüche 1 bis 7.

**9.** Filmkondensator, hergestellt durch Aufwickeln des mit Metallfilm-laminierten Films nach Anspruch 8.

## Revendications

**1.** Film de polypropylène à orientation biaxiale comprenant une résine de polypropylène comme composant principal, le film de polypropylène à orientation biaxiale ayant une rugosité moyenne arithmétique SRa sur au moins une surface comprise entre 0,03 $\mu$m et 0,10 $\mu$m, une profondeur de vallée de profil maximale SRv sur au moins une surface comprise entre 0,10 $\mu$m et 0,50 $\mu$m, où les SRa et SRv sont mesurées conformément à la norme JIS B-0601 édition 1982, et étant **caractérisé par**
un volume de vide côté vallée de profil ayant une profondeur supérieure ou égale à 0,05 $\mu$m existant dans une zone de champ visuel dans une plage de 1,252 $\mu$m x 939 $\mu$m sur au moins une surface mesurée par une mesure de forme en surface sans contact comprise entre 100 $\mu$m$^3$ et 10 000 $\mu$m$^3$,
dans lequel le volume de vide côté vallée de profil est mesuré selon le procédé indiqué dans la description.

**2.** Film de polypropylène à orientation biaxiale selon la revendication 1, dans lequel une hauteur de pic de profil maximale SRp sur au moins une surface du film de polypropylène à orientation biaxiale est comprise entre 0,3 $\mu$m et 1,0 $\mu$m,
dans lequel la hauteur de pic de profil maximale SRp est mesurée conformément à la norme JIS B-0601 édition 1982.

**3.** Film de polypropylène à orientation biaxiale selon la revendication 1 ou 2, dans lequel un rapport SRp / SRv de la profondeur de vallée de profil maximale SRv sur la hauteur de pic de profil maximale SRp sur au moins une surface du film de polypropylène à orientation biaxiale est supérieur ou égal à 2,0.

**4.** Film de polypropylène à orientation biaxiale selon l'une quelconque des revendications 1 à 3, dans lequel un rapport SRv/t entre une épaisseur de film t et la profondeur de vallée de profil maximale SRv sur au moins une surface du film de polypropylène à orientation biaxiale est inférieur ou égal à 0,30.

**5.** Film de polypropylène à orientation biaxiale selon l'une quelconque des revendications 1 à 4, dans lequel une teneur en cendres est inférieure ou égale à 50 ppm.

**6.** Film de polypropylène à orientation biaxiale selon l'une quelconque des revendications 1 à 5, dans lequel une teneur totale en particules inorganiques et/ou particules organiques est inférieure ou égale à 1% en masse.

**7.** Film de polypropylène à orientation biaxiale selon l'une quelconque des revendications 1 à 6, dans lequel le film de polypropylène à orientation biaxiale est utilisé en tant que substance diélectrique pour un condensateur.

8. Film stratifié de film métallique réalisé en formant un film métallique sur au moins une surface du film de polypropylène à orientation biaxiale selon l'une quelconque des revendications 1 à 7.

9. Condensateur à film réalisé en enroulant le film stratifié de film métallique selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014231584 A
- JP 2007246898 A
- JP 2011122142 A
- JP 2011122143 A
- JP 3829424 B
- JP S62121704 B
- JP 2869606 B

**Non-patent literature cited in the description**

- Polymer Analysis Research Council. Shinban Koubunshi Bunseki Handbook. 1995, 609-611